# EUROPEAN PATENT APPLICATION

(11) **EP 3 859 582 A1**
(43) Date of publication of application: **04.08.2021**
(21) Application number: 20160613.4
(22) Date of filing: 03.03.2020
(51) Int. Cl.: G06F 21/62, G06K 9/00

(54) **PROTECTING PERSONAL DATA AND CONTROLLING A DISTRIBUTION OF PERSONAL DATA ACQUIRED BY A POOL CLEANING ROBOT**

(30) Priority: 03.02.2020 US 202016779899
(71) Applicant: Maytronics Ltd., 19350 D.N. Kibbutz Yizrael (IL)
(72) Inventor: Armon, Shachar, 37820 Kibbutz Regavim (IL); Witelson, Shay, 19350 Kibbutz Yizrael (IL)
(74) Representative: Noble, Frederick

(57) **Abstract**

A method for controlling a distribution of personal data generated by a pool cleaning robot, the method may include acquiring, by the pool cleaning robot, visual information that potentially comprises personal data; determining, by the pool cleaning robot, whether the pool cleaning robot received an authorization to output the visual information from the pool cleaning robot; and outputting the visual information from the pool cleaning robot only after receiving the authorization to output the visual information.

## Description

### BACKGROUND

Pool cleaning robots include cameras that may assist the pool cleaning robots in navigation. These cameras may acquire personal data such as images of persons that are in the pool.

There is a growing need to protect the personal data in an efficient manner - especially in compliance with laws and regulations such as but not limited to the European General Data Protection Regulation 2016/679 (GDPR), various states or federal rules and regulations such as the California Consumer Privacy Act of 2018, and other laws and regulations across the world.

### SUMMARY

There may be provided pool cleaning robots, methods and computer readable medium as illustrated in the specification.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 is an example of a pool cleaning robot;
FIG. 2 is an example of a pool cleaning robot and its environment;
FIG. 3 is an example of various parts of a pool cleaning robot;
FIG. 4 is an example of various parts of a pool cleaning robot;
FIG. 5 is an example of communication modules;
FIG. 6 is an example of a method;
FIG. 7 is an example of a method;
FIG. 8 is an example of various components; and
FIG. 9 is an example of various components.

### DESCRIPTION OF THE PREFERRED EMBODIMENTS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the Summary of the invention of the specification.

The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

The term "and/or" is additionally or alternatively.

The terms "control unit", "remote control device", "control device" and "mobile computer" are used in an interchangeable manner.

Any reference in the specification to a pool cleaning robot should be applied mutatis mutandis to a method that can be executed by the pool cleaning robot and to a computer readable medium that stores instructions to be executed by the pool cleaning robot.

Any reference in the specification to a mobile computer should be applied mutatis mutandis to a method that can be executed by the mobile computer and to a computer readable medium that stores instructions to be executed by the mobile computer.

Any reference in the specification to method should be applied mutatis mutandis to a pool cleaning robot and/or to a mobile computer that execute the method and/or to a computer readable medium that stores instructions that once executed result in an execution of the method.

Any reference in the specification to a non-transitory computer readable medium should be applied mutatis mutandis to a pool cleaning robot and/or a mobile computer capable of executing the instructions stored in the non-transitory computer readable medium and should be applied mutatis mutandis to method that may be executed by a pool cleaning robot and/or a mobile computer that reads the instructions stored in the non-transitory computer readable medium.

Because the illustrated embodiments of the present invention may for the most part, be implemented using electronic components, touch screens and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a system capable of executing the method and should be applied mutatis mutandis to a non-transitory computer readable medium that stores instructions that once executed by a computer result in the execution of the method.

Personal data may be acquired by a pool cleaning robot. Various methods for protecting the personal data are provided.

Data may be stored locally in the said motor unit and/or the said power supply.

The data may be transferred in two-way transfer flows (robot to power supply to robot) by means of two, three or four wiring leads cables providing serial communications. Nevertheless, two way wirings is less economical proposition because of the need to implement the costlier, older generation two-way modem type data transfers.

The present specification proposes the use of a first embodiment of common modem configuration. Which contains physical layer converting interface of analog to digital and digital to analog conversions.

Another embodiment will include the more economical solution which contains physical layer converting interface of using digital to digital signal conversion system for communicating with the pool cleaning robot.

In the said embodiment, the signal conversion is digital only, the conversion methods have the advantage to be able to shift digital voltage levels, namely, adapting voltage levels from 3.3Vdc to 12Vdc or 30Vdc.

The digital signal conversion eliminates the need for dedicated additional components, PHY, transformers etc.

This said data or information may be used for the purpose of pool mapping, the two-way use and two-way processing of this data on a external portable smart device by an end user.

For example, capture, viewing and processing of real time pool cleaning robot movement trajectory, operating conditions and graphics of the said, photos or videos captured on the said smart device.

Connecting pool cleaning robots to the cloud environment such as, for example, Amazon Web Services™ (AWS) - Cloud Computing Services, further enables increased and varied abilities such as data storage facility, computing and annalysis, modify pool cleaning robot operation parameters, download features to the robot and the like. These are available as a result of the interconnection between the end user and an external OEM after sales sevice provider.

At the base of these abilities are the sensors at the end point or end unit layer.

An end user may use the said cloud as an ultimate external storage location.

The data may be kept local in the pool cleaning robot on-board motor unit memory (that comprises the PCB processing unit) or uploaded to another, second local memory storage that is located external to the pool, in the power supply whereby said data are protected and security encoded due the possible private nature of some data.

The data may be further uploaded from said local storages to the cloud by means of an IoT power supply unit.

Retrieval and uploading of the data is done only by approved users and controlled according to governing privacy protection laws or cats such as GDPR in the EU (The General Data Protection Regulation (EU) 2016/679 (GDPR)) and the USA consumer privacy acts such as The California Consumer Privacy Act - AB 375, and any other relevant or specific regulations in other states or countries.

The at least one camera may automatically and without human intervention capture and photograph the entire pool surroundings and pool constituents for the purpose of navigating and recognition of its poition in the pool.

The at least one camera may capture and photograph persons or facials underwater when initiated by an end user using a remote control device by means of a computerized or smart hand held system and/or an interfacing app with the pool cleaning robot in general and specifically with its camera system.

The rate of data transfer may be at least 100-200 Mbps and more.

This will enable transfers of photos, videos at high transfer rates that will also allow live transfers.

### Temporary interruption of pool cleaning robot camera activity

The pool cleaner on-board camera may be used as a matter of standard course for pool navigation and scanning.

Another option available to the end user is to use the pool cleaning camera for fun or for private underwater photography purposes with friends or family members and the like.

As an example, an end user may activate the camera to capture pics / photographs or video clips of another end user in their private settings. Such private uses are governed by the above-mentioned privacy acts, laws and regulations and the likes.

Importantly, this specification requires the owners of the pool cleaning robot to actively authorize in advance any such private use of the camera or any ensuing data transfers that involve sending data from the said local storages to an external storage utility such as, but not exclusively, a cloud environment.

The on-board camera system may be pre-programmed to automatically shut-off in the event of it recognizing any sudden swimmer intrusion or entry to the pool while it is being used for navigation scanning while cleaning or moving about the swimming pool.

The camera system safety device may immediately and automatically implement a privacy safety protocol as follows:
(1) cease operation of the camera - at least temporarily and shift the pool cleaner to non-camera-based navigation in the pool. Or,
(2) cease uploading of data - at least temporarily from the said motor unit and optionally shift the pool cleaner to camera-based navigation in the pool without any data uploading from within the local data storages i.e.: pool cleaning robot and/or power supply and from local to cloud.
(3) electronically and/or by auto-dialing notify pool cleaning robot owners about the event and request acknowledgement and approval recordation of further pool cleaner operation and camera activation and/or data uploading while swimmer or swimmers are in the pool.

### Uploads from local to local data storage

Underwater photographic data captured is stored in local PCB of pool cleaning robot. This motor unit data storage is protected by OEM software whereby private or sensitive data exposure may be password protected by OEM software or dedicated encryption device that will be discussed further.

End user may request, by means of smart device application such as for example, MyDolphin® app, to transfer and upload the data from the said local pool cleaning robot control PCB memory to a second, external (non-submerged) local storage in the power supply from which end user may extract or view the data for personal use. Data in the said power supply is also password protected by OEM software or dedicated encryption device that will be discussed further.

The moving/transferring and extraction of private data are controlled and strictly enforced under the said automatic implementation of a password protected safety protocol that complies with such moving/transferring and extraction of private data following an end user request and recordation of the said end user consent which are electronically managed, at OEM level, by means of access to the internet by a computer or a smart device application such as for example, the said MyDolphin® app.

End user may further request to transfer and upload the data to the cloud environment whereby this request and recordation are also electronically managed by means of password protected access to the internet at OEM level. Again, moving/transferring and extraction of private data by an end user request and recordation of the said end user consent are electronically managed by means of access to the internet by a computer or a smart device application such as for example, the said MyDolphin® app.

In addition, a cloud administrator, such as, but not exclusively, Amazon Web Services™ (AWS) - Cloud Computing Services may hold an additional authentication right to bar access, upload or download to and from to the said cloud environment platform.

Data protection from local data storage i.e.: local pool cleaning and/or power supply memory storage to the cloud environment employs a gateway key that is a hardware encryption key or a crypto authentication device that is located in the power supply, or in any device that comprises Wi-Fi® that is related to the pool cleaning robot. The device may be directly assembled onto a PCB such as, but not exclusively, ATECC508A from Microchip Technology Inc. Chandler, AZ or any of its subsidiaries. In another embodiment in this specification, the crypto authentication device may be integrated with the Wi-Fi® device such as, but not exclusively, CC3220SF from Texas Instruments Inc. (TI) Dallas, Texas.

See search PLC - ADD: PLC Power line communications, extender, repeater, bo-ster - As per DR -a WiFi extender could be the solution for you! There are a couple of different options. One of the most straightforward is a powerline ethernet kit like this starter kit from Zyxel. The kit allows you to send your internet signal over the electrical circuit in your home or office. It comes with 2 adapters; one plugs into a power socket near your current router, and the other in the location where you need signal. Connect the first one to your router using an ethernet cable, and connect the second to an ethernet device (e.g. a Smart TV or games console). The second adapter could also be connected to a WiFi router for a second WiFi network.
OR
Broadband over power lines (BPL) is a method of power line communication (PLC) that allows relatively high-speed digital data transmission over the public electric power distribution wiring

### Reactivation of camera and data transfers

As soon as the pool cleaning robot owner or end user acknowledges and accepts the privacy terms and privacy preservation conditions the camera or the data uploading will be reactivated allowing usage for private use.

Likewise, data will also be transferred from the local pool cleaning robot to the local power supply so that the end user may use the underwater camera and view camera captures transferred by the power supply Wi-Fi®.

Moreover, data may also be transferred and uploaded from the local pool cleaning robot or power supply to the cloud so that the end user may store any camera captures for private use.

The acceptance procedures for remote camera activation and/or data transfers between said locals and from locals to cloud are practically instant following which the camera may be reactivated, or data may start or resume transferring.

According to various embodiments the pool cleaning robot may operate in at least two operational modes (cleaning mode and alert mode) or may be shut off.

### Cleaning mode

When in cleaning mode the camera is "on" and scanning and uploading pool graphical view to the cloud. This will happen after written and legally binding authorisation by pool owner.

While cleaning the pool, the camera may spot an event that may infringe on privacy:
- It can be any intrusion by a person
- It can be a request initiated by a smart device to capture private underwater pics or videos. For example, family members that are not the registered owner of the pool cleaning robot but have access to the pool cleaning robot by way of a remote control smart device app, may wish to commence video or stills photograph capturing.

The camera will not stop because of such events but the pool cleaning robot may stop any uploading personal data outside the pool cleaning robot.

The pool cleaning robot may trigger a phone call, a message or an communication or notice using at least one service and/or platform and/or application such as SMS, email, WhatsApp, telegram, Instagram, Facebook or other social media platforms - to an end user (or other authorized entity) requesting an approval (acknowledgement) and/or consent that the camera may continue uploading and thereby waiving his privacy rights.

### Alert Mode

When operating in an alert mode the pool cleaning robot may mostly switch off after a cleaning cycle - but the camera may continue to be operated - for example for safety of pool reasons. In this mode no uploading can happen but pool cleaning robot may trigger a phone call, a message or a communication or notice using at least one service and/or platform and/or application such as SMS, email, WhatsApp, telegram, Instagram, Facebook or other social media platforms - to an end user (or other authorized entity) advising of a breach of safety or an unauthorized entry to the pool .

### Off Mode

In the off mode the pool cleaning robot and camera are in shut off modes.

The end user may select which operational mode to use.

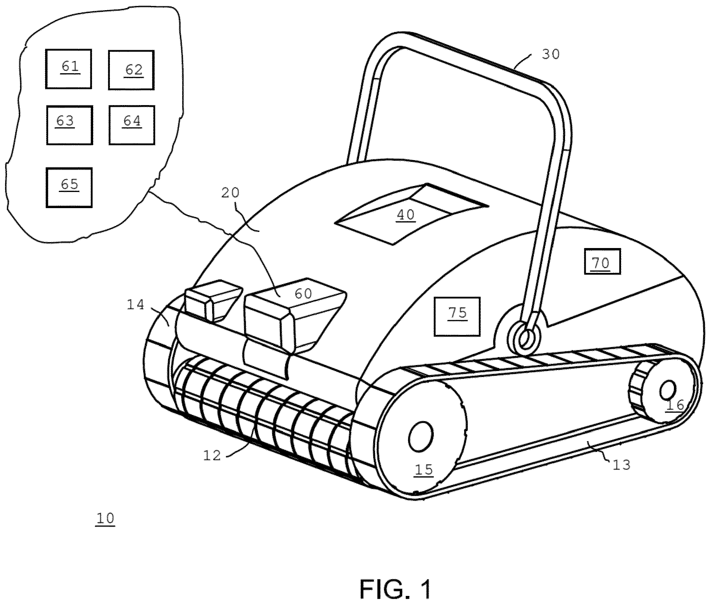

Figure 1 illustrates a pool cleaning robot, according to an embodiment of the invention. Pool cleaning robot 10 includes brush wheel 12, tracks 13 and 14, front wheel 15, rear wheel 16, housing 20, outlet 40 for outputting fluid, inlet (not shown) for receiving fluids, handle 30, controller 70, communication unit 75 that may include a receiver and a transmitter, and sensor compartment 60 that may host one or more sensors such as but not limited to gyroscope 61, turbidity sensor 62, accelerometer 63, camera 64. An entertainment LED light/laser source compartment 65 that may be combined with sensor compartment 60 or may be included in a separate compartment. Any combination of sensors may be included in the pool cleaning robot 10. Any sensor or light source may be located in any position on or within the pool cleaning robot 10.

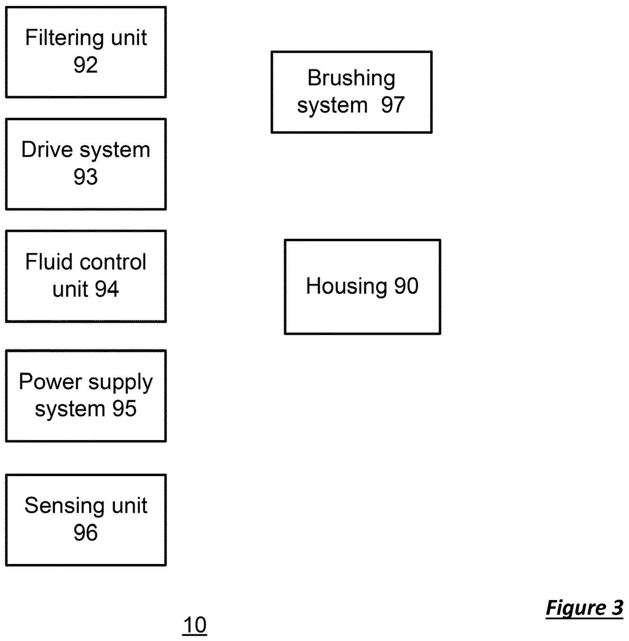

The pool cleaning robot may include at least one of the following elements:
a. A hollow body such as housing 90 (see figure 3),
b. A water intake aperture,
c. A water outlet aperture,
d. A hydraulic path stretching between the said intake and outlet,
e. A filtering and/or sieving element positioned inside the said hydraulic path (sucha s filtering unit 92 of figure 3),
f. A fluid control unit 94 that may include at least one pumping motor positioned in the hydraulic path,
g. A drive system 93 that may include at least one driving motor and set of reduction gears,
h. Travelling wheels,
i. Wheels connecting shafts,
j. A brushing system 97 that may include a pool surface dirt brushes or scrappers,
k. Auxiliary brushing or scrapping member,
l. Tracks,
m. Electrical tethered power supply cable,
n. A power supply system 95 that may include a chargeable battery,
o. An electrical power supply pack (external to the pool),
p. A communication unit for communicating (wirelessly or in a wired manner or both) with a computerized control unit.
q. An on board day and/or night camera, video or optical sensor
r. A sensing unit 96 that may include a video device that captures, memorizes locations of pool features or obstacles and calculates the relative angle and distance of the robot from these features to further calculate the robot location in the pool
s. A lighting optical recognition aid device for nighttime and/or for high turbidity conditions that may also employ an infrared light device.
t. One or more additional motion sensors such as an accelerometer and/or a gyroscope and/or an inertial measurement unit (IMU).
u. A turbidity sensor.
v. A heading direction measurement sensor such as magnetometer, compass and/or a gyrocompass
w. Impact sensors and/or pressure sensors
x. Pump motor velocity/current sensors
y. Filter status sensors

The pool cleaning robot may communicate with a control device such as a portable computer or tablet or smart telephone device including a suitable IOS, Android or Windows phone operating systems with internet and/or wireless communication abilities, each including, but not exclusively, a touch screen or the like, able to accept interactive swiping or graphical drawing by means of, for example, a finger gesture or a suitable pen device and further comprising a suitable application enabling toolbar menus for painting or drawing on the said screen by means of an application procedure that will convert the final drawing or commands to electronic digitized signals

The control device may execute a program, code and the like that will cause the control device to display a drawing application menu comprising toolbar elements such as: pool form templates, different pool features or elements such as obstacles, different shapes and lines, freehand lines brush tip, eraser tip etc.

The control device will provide the end user or operator with the manual overriding ability over a OEM preprogramming to reprogram the pool cleaning robot by loading the electronic digitized drawing of the pool into the main on-board computer of the pool cleaning robot to be processed and converted - in conjunction of the said sensors - into a navigational scanning and obstacle avoidance travelling cycle.

The control device will provide the user with the ability to interactively draw a virtual cleaning path onto the touch screen and program the pool cleaning robot accordingly.

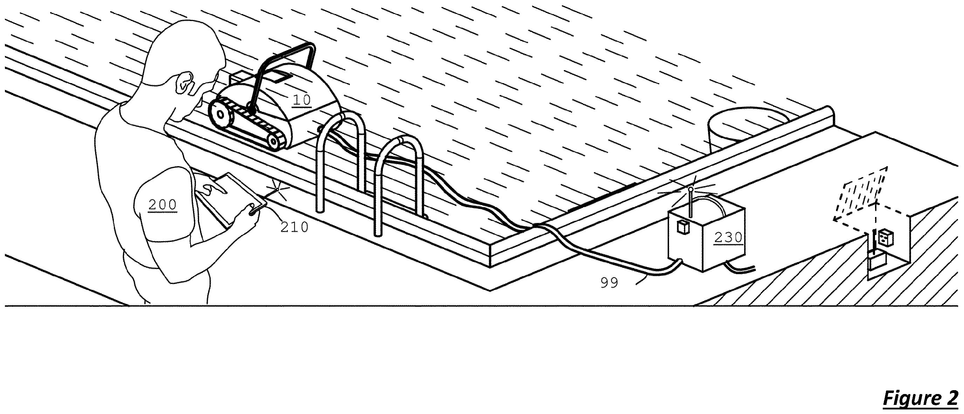

Figure 2 illustrates user 200 that operates a mobile computer such as a tablet 210, a pool cleaning robot 10, a power supply unit 230 connected by cable 99 to the pool cleaning robot 10 whereby the power supply comprises a remote controlled wireless receiving/transmitting communication module that may convert data to a digital form, and a pool according to an embodiment of the invention. In another embodiment seen in Figure 2, the communication module may be located underneath the pool deck in a precast in-ground recess whereby, a remote control wireless junction box and an antenna is powered by power supply 230 (230 A) that is positioned remotely from the pool side.

The pool cleaning robot 10 may not be connected to an external power supply unit. It may be powered by on-board batteries and a submerged docking station, may exit the pool in order to be charged by an external docking system, may be fed by pressurized fluid, and include a turbine to generate power, and the like.

Tablet 210 is merely a non-limiting example of the control unit. Tablet 210 may be wirelessly coupled to the pool cleaning robot and/or may communicate with an intermediary relay or a communication module that in turn communicates with the pool cleaning robot.

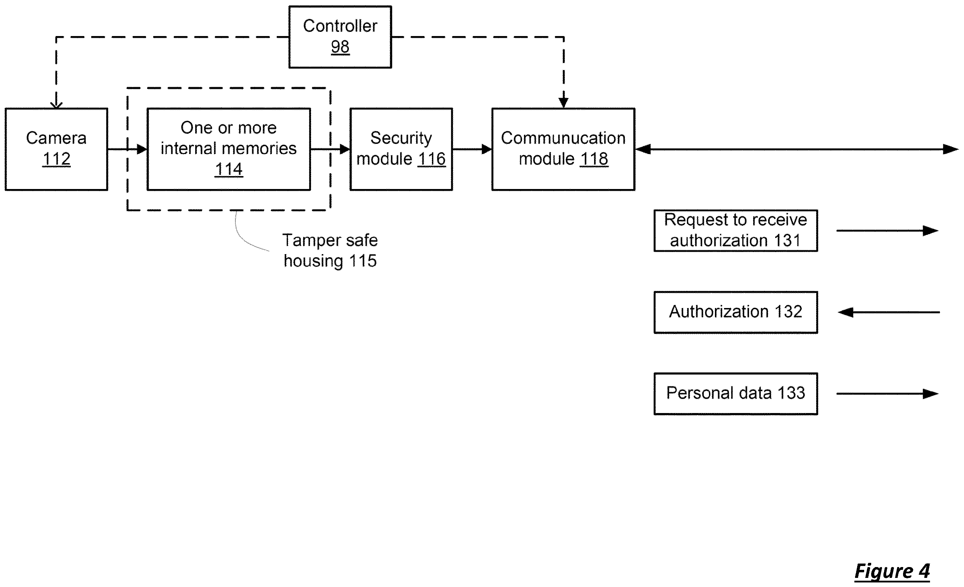

Figure 4 illustrates various components of the pool cleaning robot - such as camera 112, one or more internal memories 114, security module 116 (for example an encryption module), and communication module 118 for communicating outside the pool cleaning robot.

The one or more internal memories 114 may be be located within one or more tamper safe housing 115 - such as within a motor unit, a drive unit, within a pump motor, within an impeller, and the like.

The personal data (or visual information that potentially include personal data) may be captured by camera 112, stored in one or more internal memories 114, undergo a security enhancement measure (such as encryption) and may be transmitted outside the pool cleaning robot by the communication module 118 . Each one of the states (and even a shutting down of camera 112) may be controlled by controller 98.

For example- controller 98 may prevent at least one of the (a) acquisition of the personal data, (b) output of the personal data to the one or more internal memories 114, (c) a transmission of the personal data (or visual information that potentially include personal data) outside the pool cleaning robot.

Any of these steps may be conditioned by a reception of an authorization.

Figure 4 illustrates three steps:
a. Transmitting a request to receive authorization 131.
b. Receiving the authorization 132.
c. Outputting the personal data 133.

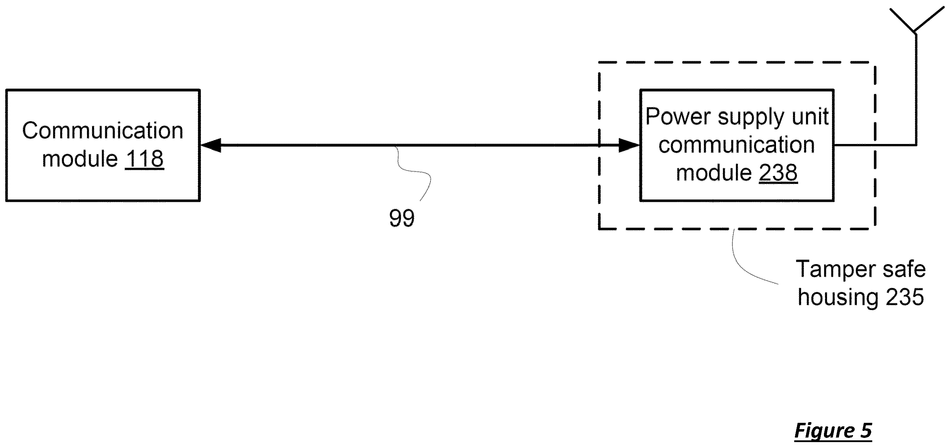

Figure 5 illustrates that the communication module 118 communicates over a wire 99 with a power supply unit communication module 238 located within a tamper safe housing 235 of the external power supply unit 230. The power supply unit 230 has an antenna or other means for further outputting the personal data.

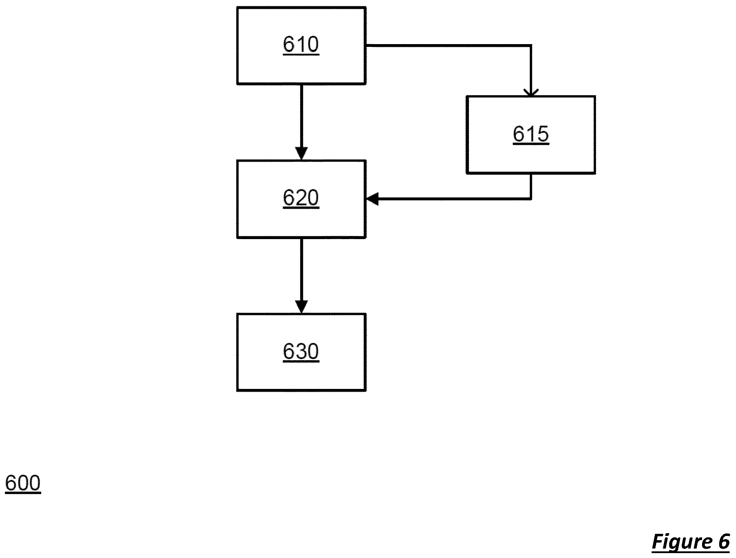

Figure 6 illustrates an example of method 600.

Method 600 may be a method for controlling a distribution of personal data generated by a pool cleaning robot.

Method 600 may start by step 610 of acquiring, by the pool cleaning robot, visual information that potentially includes personal data.

The pool cleaning robot may determine that the visual information includes personal information. Alternatively, the pool cleaning robot may estimate, based for example on the circumstances that are associated with the acquisition of the visual information (for example - the visual information was acquired while at least one person entered the pool, while at least one person is suspected to to enter the pool, and the like).

Accordingly - method 600 may include determining that the visual information potentially may include personal data when estimating or detecting that a person entered a pool in which the pool cleaning robot may be located.

Step 610 may be followed by step 620 of determining, by the pool cleaning robot, whether the pool cleaning robot received an authorization to output the visual information from the pool cleaning robot.

The authorization may be received before the execution of step 610. The user may program the pool cleaning robot or otherwise provide the authorization in advance.

Alternatively- if such an authorization is not available then the pool cleaning robot may request an authorization and wait to receive the authorization. The authorization may be requested from an entity that is authorized to provide such authorization. The entity may be identified in authorization information provided to the pool cleaning robot.

The request may include a contract that once signed provides the authorization. The request and any authorization may be stored in a secure log.

Step 620 may be followed by step 630 of outputting the visual information from the pool cleaning robot only after receiving the authorization to output the visual information.

The requesting may be executed in real time - for example within few seconds and/or within few minutes.

Step 630 may include (or may be preceded by) encrypting the visual information before the outputting of the visual information.

The encrypting may be executed by a hardware encryption module located in the pool cleaning robot.

Step 610 may be followed by step 615 of storing the visual information within an internal memory of the pool cleaning robot until the receiving the authorization to output the visual information.

The internal memory may be located within a tamper proof housing.

The internal memory may be located within at least one of a drive unit, a filtering unit and a controller of the pool cleaning robot.

Method 600 may include deleting the visual information when not receiving the authorization to output the visual information within a predetermined period after the requesting. The predefined period may be fixed, change over time, set by the user, and the like. The duration of the predefined period may be one or more minutes, less that 30 minutes, or have any other duration.

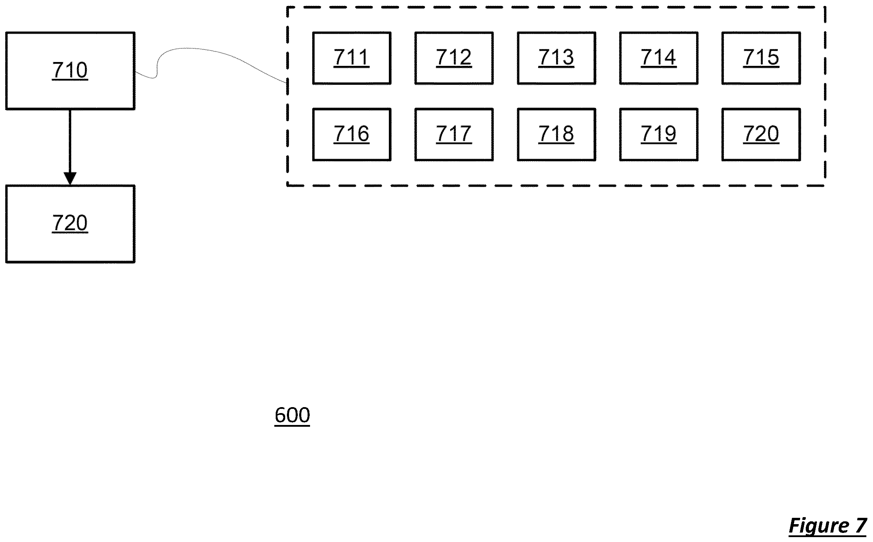

Figure 7 illustrates an example of method 700.

Method 700 may be a method for protecting personal data.

Method 710 may start by step 710 of detecting, by the pool cleaning robot, a potential breach of privacy.

Step 710 may be followed by step 720 of responding, by the pool cleaning robot, to the potential breach of privacy.

Step 720 may include at least one out of:
a. Preventing from one of more sensors of the pool cleaning robot to sense sensed information. S721
b. Sensing sensed information by the one or more sensors upon a reception of an authorization to sense the sensed information. S722
c. Preventing the one or more sensors from outputting the sensed information to an internal memory of the pool cleaning robot. S723
d. Outputting the sensed information from the one or more sensors to the internal memory upon a reception of an authorization to output the sensed information to the internal memory. S724
e. Preventing an outputting of the sensed information from the pool cleaning robot. S725
f. Outputting of the sensed information from the pool cleaning robot upon a reception of an authorization to output the sensed information from the pool cleaning robot. S726
g. Removing personal data from the sensed information. This may include identifying personal data for example by performing image recognition and/or body parts detection and masking or otherwise altering the pixels. S727
h. Requesting to receive an authorization to sense the sensed information. S728
i. Requesting to receive an authorization to outputting the sensed information from the one or more sensors to the internal memory. S729
j. Requesting to receive an authorization to output the sensed information from the pool cleaning robot. S730

It should be noted that an authorization to output the sensed information from the pool cleaning robot may implicitly include an authorization to outputting the sensed information from the one or more sensors to the internal memory and an authorization to sense the sensed information.

It should be noted that an authorization to output sensed information from one or more sensors to the internal memory and an authorization to sense the sensed information.

### Transfer of data

The ability to process data or information reaching the gateway layer at the IoT power supply with Wi-Fi® capabilities is high.

The ability the move data from the pool cleaning robot by means of serial communications using an electrical wiring cable forms a bottleneck that this specification proposes how to improve.

The pool cleaning robot transfers camera captured stills photos, video and video streaming data using serial communications.

### Optional physical layer and cable embodiments

Cable with two wiring that may include one positive and one negative each of 16 or 18 AWG for power line data transfer and communications (PLC)

Cable with three wiring that may include one positive and one negative each of 16 or 18 AWG with a third data wiring of 22-28AWG

Cable with four wiring that may include positive and negative each of 16 or 18AWG + a pair of data wiring 22-28AWG - one twisted wiring per cable - Cat5, Cat5e or similar

Electronics front end/ driver
a. RS485 levels
b. Cable driver
c. Differential Proprietary serial communications
d. Coaxial Cable

Connectors and cable swiveling connector pin options
a. Solid or spring metal (Tin, gold) pin / contact
b. Coaxial connector

Gradual 2 contact pin / jack ("2.5, 3.5 mm Audio jack style")

Data Formats options
a. Digital video formats (Serial)
b. ITU656
c. streaming uncompressed PAL or NTSC Standard Definition TV (525 or 625 lines) signals:
   (1) Interlaced video data
   (2) Color space YCbCr 13.5MHz sampling frequency for pixels
d. DOCSIS-
e. Video Over DOCSIS ()
f. SMPTE (259M, 344M, 292M, 372M, 424M)
g. 10-bit serial digital interface operating at 143/270/360 Mb/s
h. HomePlug (IEEE-1901)
i. SMPTE
j. Composite Video (NTSC, PAL, SECAM)
k. analog video transmission that carries standard definition video typically at 480i or 576i resolution as a single channel.

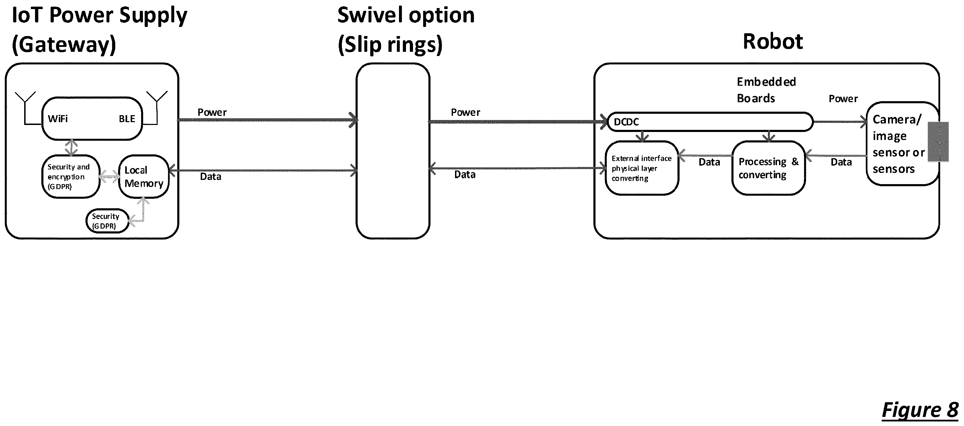

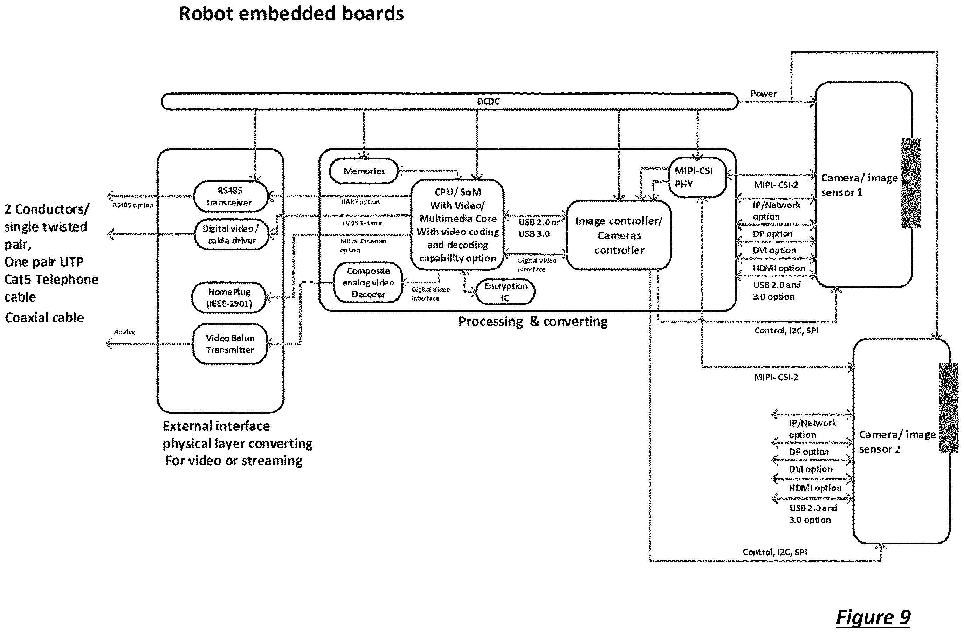

Figures 8-9 illustrates various connectors between various components - some of which belong to the pool cleaning robot.

Any combination between any methods mentioned in the specification may be provided.

There may be provided a method for controlling a distribution of personal data generated by a pool cleaning robot, the method may include acquiring, by the pool cleaning robot, visual information that potentially may include personal data; determining, by the pool cleaning robot, whether the pool cleaning robot received an authorization to output the visual information from the pool cleaning robot; and outputting the visual information from the pool cleaning robot only after receiving the authorization to output the visual information.

The method may include requesting to receive the authorization from an entity that may be authorized to provide the authorization to output the visual information.

The requesting may be executed in real time; and the outputting of the visual information may include encrypting the visual information before the outputting of the visual information.

The encrypting may be executed by a hardware encryption module located in the pool cleaning robot.

The method may include storing the visual information within an internal memory of the pool cleaning robot until the receiving the authorization to output the visual information.

The internal memory may be located within a tamper proof housing.

The internal memory may be located within at least one of a drive unit, a filtering unit and a controller of the pool cleaning robot.

The method may include deleting the visual information when not receiving the authorization to output the visual information within a predetermined period after the requesting.

The method may include determining that the visual information potentially may include personal data when estimating or detecting that a person entered a pool in which the pool cleaning robot may be located.

The method may include detecting, by the pool cleaning robot, a potential breach of privacy; and responding, by the pool cleaning robot, to the potential breach of privacy.

The responding may include preventing the one or more sensors from outputting the sensed information to an external memory of the pool cleaning robot.

The responding may include outputting the sensed information from the one or more sensors to the internal or the external memory upon a reception of an authorization to output the sensed information to the internal or external memory.

There may be provided a non-transitory computer readable medium that stores instructions for controlling a distribution of personal data generated by a pool cleaning robot, by : acquiring, by the pool cleaning robot, visual information that potentially may include personal data; determining, by the pool cleaning robot, whether the pool cleaning robot received an authorization to output the visual information from the pool cleaning robot; and outputting the visual information from the pool cleaning robot only after receiving the authorization to output the visual information.

The non-transitory computer readable medium may store instructions for protecting personal data, may include detecting, by the pool cleaning robot, a potential breach of privacy; and responding, by the pool cleaning robot, to the potential breach of privacy.

There may be provided a pool cleaning robot that may include a sensing unit that may be constructed and arranged to acquire visual information that potentially may include personal data; a processor that may be constructed and arranged to determine, whether the pool cleaning robot received an authorization to output the visual information from the pool cleaning robot; and a communication unit may be constructed and arranged to output the visual information from the pool cleaning robot only after receiving the authorization to output the visual information.

The terms "including", "comprising", "having", "consisting" and "consisting essentially of" are used in an interchangeable manner. For example- any method may include at least the steps included in the figures and/or in the specification, only the steps included in the figures and/or the specification. The same applies to the pool cleaning robot and the mobile computer.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

In the foregoing specification, the invention has been described with reference to specific examples of embodiments of the invention. It will, however, be evident that various modifications and changes may be made therein without departing from the broader spirit and scope of the invention as set forth in the appended claims.

Moreover, the terms "front, " "back, " "top, " "bottom, " "over, " "under " and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one as or more than one. Also, the use of introductory phrases such as "at least one " and "one or more " in the claims should not be construed to imply that the introduction of another claim element by the indefinite articles "a " or "an " limits any particular claim containing such introduced claim element to inventions containing only one such element, even when the same claim includes the introductory phrases "one or more " or "at least one " and indefinite articles such as "a " or "an. " The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements the mere fact that certain measures are recited in mutually different claims does not indicate that a combination of these measures cannot be used to advantage.

Any system, apparatus or device referred to this patent application includes at least one hardware component.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A method for controlling a distribution of personal data generated by a pool cleaning robot, the method comprises:
acquiring, by the pool cleaning robot, visual information that potentially comprises personal data;
determining, by the pool cleaning robot, whether the pool cleaning robot received an authorization to output the visual information from the pool cleaning robot; and
outputting the visual information from the pool cleaning robot only after receiving the authorization to output the visual information.

2. The method according to claim 1 comprising: requesting to receive the authorization from an entity that is authorized to provide the authorization to output the visual information.

3. The method according to claim 2 wherein the requesting is executed in real time; and
wherein the outputting of the visual information comprises encrypting the visual information before the outputting of the visual information.

4. The method according to claim 3 wherein the encrypting is executed by a hardware encryption module located in the pool cleaning robot.

5. The method according to claim 2 comprising storing the visual information within an internal memory of the pool cleaning robot until the receiving the authorization to output the visual information.

6. The method according to claim 5 wherein the internal memory is located within a tamper proof housing.

7. The method according to claim 5 wherein the internal memory is located within at least one of a drive unit, a filtering unit and a controller of the pool cleaning robot.

8. The method according to claim 2 comprising deleting the visual information when not receiving the authorization to output the visual information within a predetermined period after the requesting.

9. The method according to claim 1 comprising determining that the visual information potentially comprises personal data when estimating or detecting that a person entered a pool in which the pool cleaning robot is located.

10. The method for protecting personal data according to claim 1, further comprising: detecting, by the pool cleaning robot, a potential breach of privacy; and responding, by the pool cleaning robot, to the potential breach of privacy.

11. The method according to claim 10 wherein the responding comprises preventing the one or more sensors from outputting the sensed information to an internal memory of the pool cleaning robot.

12. The method according to claim 10 wherein the responding comprises preventing the outputting of the sensed information from at least one of (a) a local memory storage that is external to the pool, (b) an external memory location, and (c) a cloud.

13. The method according to claim 11 wherein the responding comprises outputting the sensed information from the one or more sensors to the internal or the external memory upon a reception of an authorization to output the sensed information to the internal or external memory.

14. A non-transitory computer readable medium that stores instructions for controlling a distribution of personal data generated by a pool cleaning robot, by :
acquiring, by the pool cleaning robot, visual information that potentially comprises personal data; determining, by the pool cleaning robot, whether the pool cleaning robot received an authorization to output the visual information from the pool cleaning robot;
and outputting the visual information from the pool cleaning robot only after receiving the authorization to output the visual information.

15. The non-transitory computer readable medium according to claim 13 that further stores instructions for protecting personal data, comprises detecting, by the pool cleaning robot, a potential breach of privacy; and responding, by the pool cleaning robot, to the potential breach of privacy.

16. A pool cleaning robot that comprises a sensing unit that is constructed and arranged to acquire visual information that potentially comprises personal data; a processor that is constructed and arranged to determine, whether the pool cleaning robot received an authorization to output the visual information from the pool cleaning robot; and a communication unit is constructed and arranged to output the visual information from the pool cleaning robot only after receiving the authorization to output the visual information.
